# EUROPEAN PATENT APPLICATION

(11) **EP 4 621 535 A1**
(43) Date of publication of application: **24.09.2025**
(21) Application number: 23896439.9
(22) Date of filing: 01.11.2023
(51) Int. Cl.: G06F 3/04817, G06F 3/048, G06F 9/451, G06F 9/445

(54) **DISPLAY METHOD, DISPLAY APPARATUS AND WEARABLE DEVICE**

(30) Priority: 30.11.2022 CN 202211514194
(71) Applicant: Huawei Technologies Co., Ltd., Shenzhen, Guangdong 518129 (CN)
(72) Inventor: NIE, Wu, Shenzhen, Guangdong 518129 (CN)
(74) Representative: Maiwald GmbH
(86) International application number: PCT/CN2023/129158
(87) International publication number: WO 2024/114285

(57) **Abstract**

A display method is provided, which is applied to a wearable device. The method includes: displaying a first interface in response to a first operation, where the first interface includes two display areas: an application icon display area and a preview picture display area, and an interface preview picture corresponding to a target application in a central area of the icon display area is displayed in the preview picture display area; and displaying an application interface of the target application in response to a second operation, where the application interface is displayed starting from an edge position of the second display area, and the application interface entirely covers a display. In this way, picture switching smoothness of the wearable device can be improved.

## Description

This application claims priority to Chinese Patent Application No. 202211514194.8, filed with the China National Intellectual Property Administration on November 30, 2022, and entitled "DISPLAY METHOD, DISPLAY APPARATUS, AND WEARABLE DEVICE", which is incorporated herein by reference in its entirety.

### TECHNICAL FIELD

Embodiments of this application relate to the field of electronic device technologies, and more specifically, to a display method, a display apparatus, and a wearable device.

### BACKGROUND

In wearable intelligent devices such as smartwatches, a desktop is used frequently. The desktop usually includes a plurality of application icons, and layout manners of the application icons are usually a list manner, a grid manner, a planetary manner, and the like. A user may slide the application icons and select a target application icon to access an application that the user wants to access.

When the user taps an application icon to start an application, an application interface is displayed starting from an icon display area and entirely covers a screen. In this process, a central processing unit (central processing unit, CPU) needs to perform a plurality of operations such as image drawing and rendering. This consumes a large amount of computing power of the CPU. Consequently, a case such as freezing during picture switching is likely to occur, and experience of operation smoothness is poor. Therefore, a display method needs to be provided to improve picture switching smoothness.

### SUMMARY

Embodiments of this application provide a display method, a display apparatus, and a wearable device, to improve picture switching smoothness.

According to a first aspect, a display method is provided, applied to a wearable device. The method includes: displaying a first interface in response to a first operation, where the first interface includes a first display area and a second display area, the first display area is set on a side of the second display area, the first display area includes at least one application icon, the at least one application icon is sequentially arranged from a central area of the first display area to areas on two sides of the first display area, the second display area includes an interface preview picture of a target application, and the target application is an application in the central area; and displaying an application interface of the target application in response to a second operation, where the application interface is displayed starting from an edge position of the second display area, and the application interface entirely covers a display.

In this embodiment provided in this application, the wearable device includes two display areas. The interface preview picture of the target application is displayed in the second display area. When the target application is started, the application interface of the target application is displayed starting from the edge position of the second display area and entirely covers the display rather than being displayed starting from a position of an application icon of the target application. Therefore, a stroke of starting the application interface can be shortened, computing power consumed by a CPU in aspects such as image drawing can be reduced, picture switching smoothness can be improved when the application interface is opened, and user experience can be optimized.

With reference to the first aspect, in some implementations of the first aspect, the application interface is an interface corresponding to the interface preview picture.

In this embodiment provided in this application, the application interface is the interface corresponding to the interface preview picture. In other words, an image displayed on the application interface is the same as an image displayed on the interface preview picture, so that the computing power consumed by the CPU can be further reduced, the picture switching smoothness can be improved, and user experience can be optimized.

With reference to the first aspect, in some implementations of the first aspect, when duration of an interval from a moment at which the first interface is displayed to a moment at which the target application is last exited is less than or equal to keep-alive time of the target application, the interface preview picture is a picture corresponding to an interface that is of the target application and that is presented when the target application is last exited, and the keep-alive time is time for which a process of the target application runs in the background. Alternatively, when duration of an interval from a moment at which the first interface is displayed to a moment at which the target application is last exited is greater than keep-alive time of the target application, the interface preview picture is a picture corresponding to a main interface of the target application.

In this embodiment provided in this application, when the application is restarted within the keep-alive time of the application, the process of the application has not exited, and the displayed application interface is an application interface present when the application is last exited. When the application is restarted beyond the keep-alive time, the process of the application has exited, and the displayed application interface is the main interface of the application. The interface preview picture of the application is displayed based on the keep-alive time, so that the opened application interface can be the interface corresponding to the interface preview picture. Therefore, the picture switching smoothness can be improved, and user experience can be optimized.

With reference to the first aspect, in some implementations of the first aspect, the second operation includes any one of the following operations: staying on the first interface, where staying time is greater than or equal to a preset threshold; tapping an application icon of the target application; and tapping the interface preview picture.

In this embodiment provided in this application, a user may select different operation manners to start the target application according to an actual requirement, so that user experience can be optimized. In addition, the target application is started in a manner in which the time for staying on the first interface exceeds the preset threshold, so that operation steps of the user can be simplified, and the operation manner is more convenient.

With reference to the first aspect, in some implementations of the first aspect, when the staying time for staying on the first interface is less than the preset threshold, and duration of an interval from a current moment to the moment at which the target application is last exited is greater than the keep-alive time, the display method further includes: switching the interface preview picture from the picture corresponding to the interface that is of the target application and that is presented when the target application is last exited to the picture corresponding to the main interface of the target application.

In this embodiment provided in this application, display of the interface preview picture may be automatically switched based on whether the duration of the interval is within the keep-alive time of the application, so that the interface present when the application is started is the same as the interface corresponding to the interface preview picture. Therefore, the picture switching smoothness is improved, and user experience is optimized.

With reference to the first aspect, in some implementations of the first aspect, the display method further includes: in response to a third operation, sliding the at least one application icon in the first display area.

With reference to the first aspect, in some implementations of the first aspect, the third operation includes any one of the following operations: sliding the at least one application icon on the display of the wearable device; rotating a control button of the wearable device; and rotating a sliding frame of the wearable device.

In this embodiment provided in this application, the user may slide the application icon in different manners according to an actual use requirement, to select the target application that needs to be accessed, so that user experience is improved.

With reference to the first aspect, in some implementations of the first aspect, the display method further includes: displaying a first replacement area and/or a second replacement area in response to a fourth operation performed on the first display area or the second display area, where the first replacement area is a replacement area of the first display area, and the second replacement area is a replacement area of the second display area; and in response to a fifth operation, displaying the at least one application icon in the first replacement area and displaying the interface preview picture in the second replacement area.

With reference to the first aspect, in some implementations of the first aspect, the first replacement area and/or the second replacement area include/includes one or more areas.

In this embodiment provided in this application, the user may select a replacement position of the display area according to an actual requirement such as a wearing status of the wearable device, so that display positions of the first display area and the second display area conform to a habit of viewing the display in different wearing manners. Therefore, user experience is further optimized.

With reference to the first aspect, in some implementations of the first aspect, the second display area further includes a name of the target application.

In this embodiment provided in this application, when the second display area includes the name of the target application, the user may more clearly determine what kind of application is in the central area of the first display area, and better distinguish between different applications, so that user experience is further optimized.

With reference to the first aspect, in some implementations of the first aspect, the first display area is in a crescent shape or a spindle shape, and the second display area is in a circular shape.

In this embodiment provided in this application, the first display area is in the crescent shape or the spindle shape, and the second display area is in the circular shape, so that display space of the display can be more fully used.

With reference to the first aspect, in some implementations of the first aspect, the wearable device is a smartwatch or a smart band.

According to a second aspect, a display apparatus is provided. The apparatus includes: a detection unit, configured to detect a first operation; and a display unit, configured to display a first interface. The first interface includes a first display area and a second display area, the first display area is set on a side of the second display area, the first display area includes at least one application icon, the at least one application icon is sequentially arranged from a central area of the first display area to areas on two sides of the first display area, the second display area includes an interface preview picture of a target application, and the target application is an application in the central area. The detection unit is further configured to detect a second operation. The display unit is further configured to display an application interface of the target application, where the application interface is displayed starting from an edge position of the second display area, and the application interface entirely covers a display.

With reference to the second aspect, in some implementations of the second aspect, the application interface is an interface corresponding to the interface preview picture.

With reference to the second aspect, in some implementations of the second aspect, when duration of an interval from a moment at which the first interface is displayed to a moment at which the target application is last exited is less than or equal to a keep-alive time of the target application, the interface preview picture is a picture corresponding to an interface that is of the target application and that is presented when the target application is last exited, and the keep-alive time is a time for which a process of the target application runs in the background. Alternatively, when duration of an interval from a moment at which the first interface is displayed to a moment at which the target application is last exited is greater than a keep-alive time of the target application, the interface preview picture is a picture corresponding to a main interface of the target application.

With reference to the second aspect, in some implementations of the second aspect, the second operation includes any one of the following operations: staying on the first interface, where a staying time is greater than or equal to a preset threshold; tapping an application icon of the target application; and tapping the interface preview picture.

With reference to the second aspect, in some implementations of the second aspect, the detection unit is further configured to detect staying on the first interface. The apparatus further includes a processing unit, and the processing unit is configured to: when the staying time is less than the preset threshold, and duration of an interval from a current moment to the moment at which the target application is last exited is greater than the keep-alive time, switch the interface preview picture from the picture corresponding to the interface that is of the target application and that is presented when the target application is last exited to the picture corresponding to the main interface of the target application.

With reference to the second aspect, in some implementations of the second aspect, the detection unit is further configured to detect a third operation, where the third operation is used to enable the at least one application icon to slide in the first display area.

With reference to the second aspect, in some implementations of the second aspect, the third operation includes any one of the following operations: sliding the at least one application icon on the display of the wearable device; rotating a control button of the wearable device; and rotating a sliding frame of the wearable device.

With reference to the second aspect, in some implementations of the second aspect, the detection unit is further configured to detect a fourth operation performed on the first display area or the second display area. The display unit is further configured to display a first replacement area and/or a second replacement area, where the first replacement area is a replacement area of the first display area, and the second replacement area is a replacement area of the second display area. The detection unit is further configured to detect a fifth operation. The display unit is further configured to: display the at least one application icon in the first replacement area and display the interface preview picture in the second replacement area.

With reference to the second aspect, in some implementations of the second aspect, the first replacement area and/or the second replacement area include/includes one or more areas.

With reference to the second aspect, in some implementations of the second aspect, the second display area further includes a name of the target application.

With reference to the second aspect, in some implementations of the second aspect, the first display area is in a crescent shape or a spindle shape, and the second display area is in a circular shape.

With reference to the second aspect, in some implementations of the second aspect, the wearable device is a smartwatch or a smart band.

According to a third aspect, a wearable device is provided, including a processor and a memory. The memory is coupled to the processor, the memory is configured to store computer program code, and the processor is configured to invoke a computer program from the memory and run the computer program, so that the wearable device performs the method according to any one of the first aspect and the possible implementations of the first aspect.

According to a fourth aspect, a chip system is provided. The chip system includes at least one processor, and when program instructions are executed in the at least one processor, the method according to any one of the first aspect and the possible implementations of the first aspect is implemented.

According to a fifth aspect, a computer storage medium is provided, including computer instructions. When the computer instructions are run on a wearable device, the wearable device is enabled to perform the method according to any one of the first aspect and the possible implementations of the first aspect.

According to a sixth aspect, a computer program product is provided. When the computer program product runs on a wearable device, the wearable device is enabled to perform the method according to any one of the first aspect and the possible implementations of the first aspect.

### BRIEF DESCRIPTION OF DRAWINGS

FIG. 1 is a diagram of a hardware structure of a wearable device;
FIG. 2 is a diagram of a software structure of a wearable device;
FIG. 3 is a diagram of a structure of a wearable device according to an embodiment of this application;
FIG. 4 is a diagram of user interfaces of a wearable device;
FIG. 5(a) and FIG. 5(b) are diagrams of user interfaces of a wearable device according to an embodiment of this application;
FIG. 6(a) to FIG. 6(d) are diagrams of user interfaces of a wearable device according to an embodiment of this application;
FIG. 7(a) to FIG. 7(d) are diagrams of user interfaces of a wearable device according to an embodiment of this application;
FIG. 8 is a diagram of a user interface of a wearable device according to an embodiment of this application;
FIG. 9 is a diagram of user interfaces of a wearable device according to an embodiment of this application;
FIG. 10 is a schematic flowchart of a display method of a wearable device according to an embodiment of this application;
FIG. 11 is a block diagram of a structure of a display apparatus according to an embodiment of this application; and

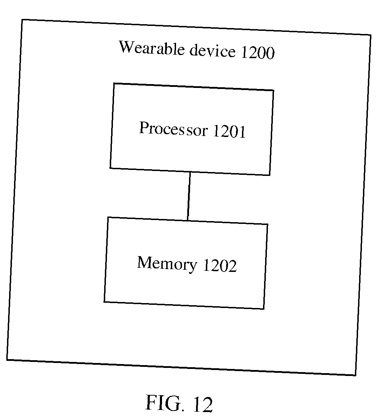

FIG. 12 is a block diagram of a structure of a wearable device according to an embodiment of this application.

### DESCRIPTION OF EMBODIMENTS

The following describes technical solutions of embodiments in this application with reference to accompanying drawings.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner.

The terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features.

In embodiments of this application, descriptions such as "when", "in a case", and "if" all mean that a device performs corresponding processing in a specific objective situation, but are not intended to limit time, do not require that the device has a determining action during implementation, and do not mean any other limitation.

The terms "include", "comprise", and variants thereof all mean "include but are not limited to", unless otherwise specifically emphasized in another manner.

The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B.

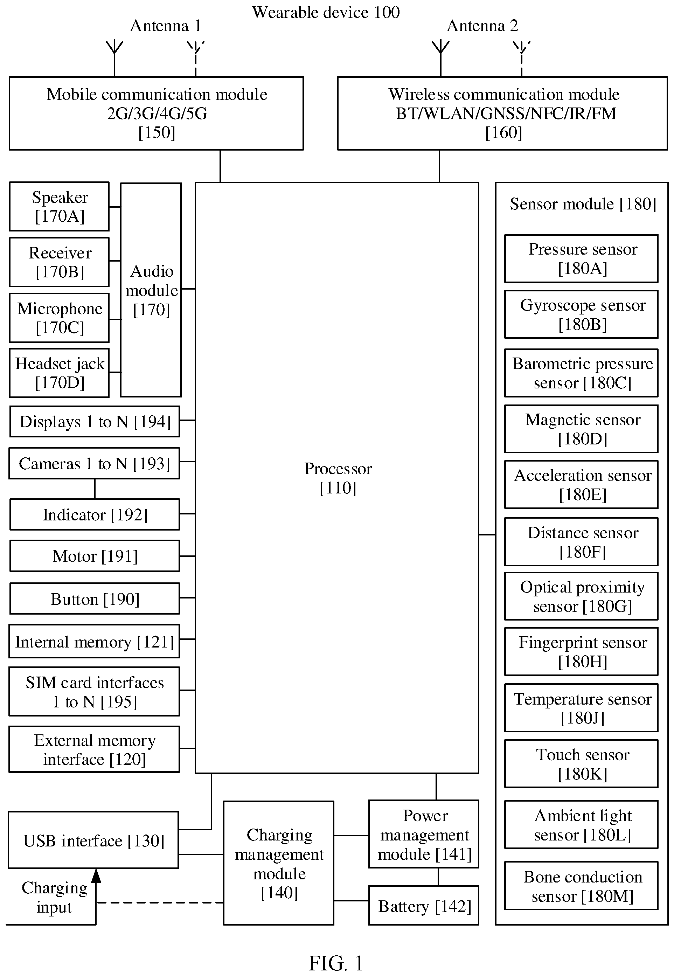

For example, FIG. 1 is a diagram of a structure of a wearable device 100. The wearable device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a compass 190, a motor 191, an indicator 192, a camera 193, a display 194, a subscriber identity module (subscriber identity module, SIM) card interface 195, and the like.

It may be understood that the structure shown in this embodiment of this application does not constitute a specific limitation on the wearable device 100. In some other embodiments of this application, the wearable device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the wearable device 100 may alternatively include one or more processors 110. The controller may generate an operation control signal based on instruction operation code and a time sequence signal, to complete control of instruction fetching and instruction execution. In some other embodiments, a memory may be further disposed in the processor 110, to store instructions and data. For example, the memory in the processor 110 may be a cache. The memory may store instructions or data that has been recently used or cyclically used by the processor 110. If the processor 110 needs to use the instructions or the data again, the processor 110 may directly invoke the instructions or the data from the memory. This avoids repeated access and reduces a waiting time of the processor 110, so that data processing or instruction execution efficiency of the wearable device 100 is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 may be configured to connect to a charger to charge the wearable device 100, or may be configured to transmit data between the wearable device 100 and a peripheral device.

It may be understood that an interface connection relationship between the modules shown in this embodiment of this application is merely an example for description, and does not constitute a limitation on the structure of the wearable device 100.

The charging management module 140 is configured to receive charging input from the charger. The charger may be a wireless charger or a wired charger. In some embodiments of wired charging, the charging management module 140 may receive charging input of the wired charger through the USB interface 130. In some embodiments of wireless charging, the charging management module 140 may receive wireless charging input through a wireless charging coil of the wearable device 100. When charging the battery 142, the charging management module 140 may further supply power to the wearable device by using the power management module 141.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance).

A wireless communication function of the wearable device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the wearable device 100 may be configured to cover one or more communication frequency bands. Different antennas may be further reused, to improve antenna utilization.

The mobile communication module 150 may provide a wireless communication solution that is applied to the wearable device 100 and that includes 2G, 3G, 4G, 5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit an electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component with at least some modules of the processor 110.

The wireless communication module 160 may provide a wireless communication solution that is applied to the wearable device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a modulated and amplified signal into an electromagnetic wave for radiation through the antenna 2.

The wearable device 100 may realize a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, or the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. The display 194 of the wearable device 100 may be a flexible display.

The wearable device 100 may realize a photographing function by using the ISP, the camera 193, the video codec, the GPU, the display 194, the application processor, and the like. The ISP is configured to process data fed back by the camera 193.

The camera 193 is configured to capture a static image or a video. An optical image of an object is generated through a lens, and is projected onto a photosensitive element. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV.

The digital signal processor is configured to process a digital signal, and may process another digital signal in addition to the digital image signal.

The video codec is configured to compress or decompress a digital video. The wearable device 100 may support one or more types of video codecs.

The NPU is a neural-network (neural-network, NN) computing processor. The NPU quickly processes input information with reference to a structure of a biological neural network, for example, with reference to a transfer mode between human brain neurons, and may further continuously perform self-learning.

The external memory interface 120 may be configured to connect to an external memory card, for example, a micro SD card, to extend a storage capability of the wearable device 100. The external memory card communicates with the processor 110 through the external memory interface 120, to realize a data storage function. For example, files such as music and videos are stored in the external memory card.

The internal memory 121 may be configured to store one or more computer programs. The one or more computer programs include instructions. The processor 110 may run the instructions stored in the internal memory 121, to enable the wearable device 100 to perform the method provided in some embodiments of this application, various applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the wearable device 100, and the like. In addition, the internal memory 121 may include a high-speed random access memory, and may further include a non-volatile memory, for example, one or more magnetic disk storage components, a flash memory component, or a universal flash storage (universal flash storage, UFS). In some embodiments, the processor 110 may run the instructions stored in the internal memory 121 and/or the instructions stored in the memory disposed in the processor 110, to enable the wearable device 100 to perform the method provided in embodiments of this application, other applications, and data processing. The wearable device 100 may realize an audio function such as music playing or recording through the audio module 170, the speaker 170A, the receiver 170B, the microphone 170C, the headset jack 170D, the application processor, and the like.

The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

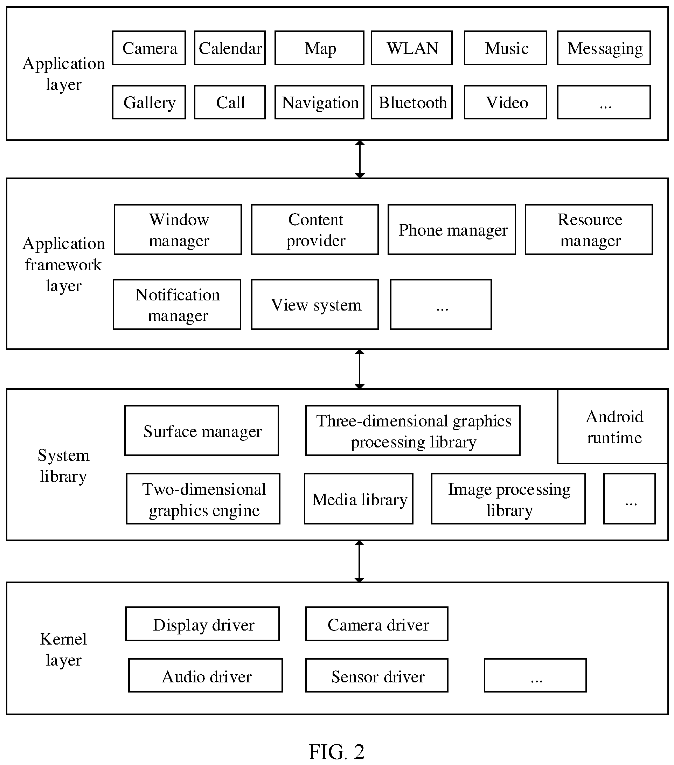

FIG. 2 is a block diagram of a software structure of the wearable device 100 according to an embodiment of this application. In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom. The application layer may include a series of application packages.

As shown in FIG. 2, an application package may include applications such as Camera, Gallery, Calendar, Call, Map, Navigation, WLAN, Bluetooth, Music, Video, and Messaging.

The application framework layer provides an application programming interface (application programming interface, API) and a programming framework for an application at the application layer. The application framework layer includes some predefined functions.

For example, in this application, an image processing algorithm and the like may be included in the application framework layer.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

For example, in this application, a content controller may obtain, in real time, an image captured on a preview interface, and display a processed image on the preview interface.

The view system includes visual controls such as a control for displaying a text and a control for displaying a picture. The view system may be configured to construct an application. A display interface may include one or more views. For example, a display interface including a short message service message notification icon may include a view for displaying a text and a view for displaying a picture.

The phone manager is configured to provide a communication function for the wearable device 100, for example, management of a call status (including answering, declining, and the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of graph or scroll bar text, for example, a notification of an application that is run on a background, or may be a notification that appears on a screen in a form of dialog window. For example, text information is prompted in the status bar, an alert tone is made, the wearable device vibrates, or an indicator blinks.

The Android runtime includes a kernel library and a virtual machine. The Android runtime is responsible for scheduling and management of the Android system.

The kernel library includes two parts: a performance function that needs to be invoked in Java language and a kernel library of Android.

The application layer and the application framework layer run on the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

For ease of understanding, in the following embodiments of this application, a wearable device having the structures shown in FIG. 1 and FIG. 2 is used as an example to describe in detail, with reference to the accompanying drawings and application scenarios, a display method provided in embodiments of this application.

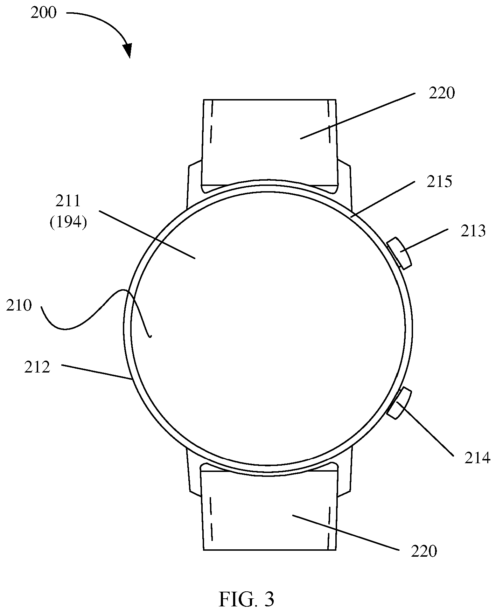

FIG. 3 is a diagram of a structure of a wearable device according to an embodiment of this application. In some embodiments, the wearable device may be a smartwatch or a smart band. Refer to FIG. 3. The wearable device 200 includes a main body 210 and two wristbands 220. The wristband 220 may be fastened or movably connected to the main body 210. The wristband 220 may be wound around a wrist, an arm, a leg, or another part of a body, to fasten the wearable device 200 to the body of a user. The main body 210 may include a housing 212 and a cover body 211. The housing 212 surrounds the cover body 211. For example, the housing 212 includes a groove (not shown in FIG. 3) provided at the top, the cover body 211 is accommodated in the groove, and an edge of the cover body 211 is adjacent to and fastened on the groove of the housing 212, to form a surface of the main body 210. A structure formed by the housing 212 and the cover body 211 has internal accommodation space, and may accommodate a combination of one or more components shown and not shown in FIG. 1, to realize various functions of the wearable device 200. The main body 210 may further include a first control button 213 and/or a second control button 214. For example, the first control button 213 and/or the second control button 214 may be a button or a knob. In an embodiment in which the wearable device is a smartwatch, the first control button 213 and/or the second control button 214 may be a crown of the watch, or may be referred to as a watch crown. The first control button 213 and/or the second control button 214 may support a pressing operation, a rotation operation, or the like of the user, and may be configured to realize different functions such as power-on/off, volume adjustment, and application starting or exiting of the wearable device.

As the surface of the main body 210, the cover body 211 may be used as a protection board of the main body 210, to prevent a component accommodated in the housing 212 from being damaged due to exposure. For example, the cover body 211 may be transparent. For example, the cover body 211 may include a crystal, for example, a sapphire crystal, or the cover body 211 may be made of glass, plastic, or another material.

In some embodiments, the cover body 211 may be a display 194, and the user may interact with the wearable device 100 through the display 194. For example, the display 194 may receive user input, and perform corresponding output in response to the user input. For example, the user may select to open or edit a graph by touching or pressing a position of the graph on the display 194 (or in another manner).

In some embodiments, the main body 210 may further include a sliding frame 215, and the sliding frame 215 may surround the cover body 211 and may rotate relative to the cover body. The sliding frame 215 may support a rotation operation and the like of the user, and is configured to realize functions such as volume adjustment and interface switching of the wearable device.

The housing 212 may be made of various materials, including but not limited to plastic, metal, alloy, and the like.

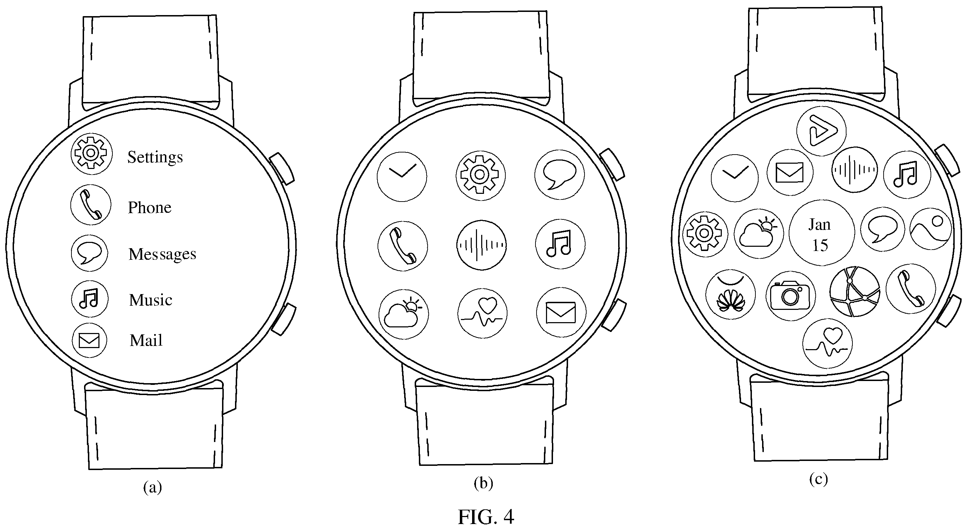

FIG. 4 is a diagram of a desktop, that is, a home screen of the wearable device. In wearable devices such as smartwatches, the desktop is used frequently. The desktop usually includes a plurality of application icons, and a layout manner of the application icons may be a list manner, as shown in (a) in FIG. 4. The application icons may be arranged in a vertical list manner or a horizontal list manner ((a) in FIG. 4 shows the vertical list manner).

A display manner of the application icons may alternatively be a grid manner. As shown in (b) in FIG. 4, all application icons on an intelligent device are displayed on the desktop in the grid manner. The user needs to determine, based on an appearance of the icon, what kind of application the application is, and search for a target application through sliding.

The display manner of the application icon may alternatively be a planetary manner. All application icons on the device may be displayed on the desktop in the planetary manner. Each application icon may be enlarged or reduced. The target application is selected by enlarging the application icon or the target application is searched by sliding the icons in different directions. The user may slide the application icons and select a target application icon to access an application that the user wants to access.

For the foregoing display manners, after determining the target application that the user needs to access, the user may tap the corresponding application icon to open an application interface of the application, and the application interface entirely covers a screen from an icon display area. In this process, a CPU needs to perform a plurality of operations such as drawing and rendering of an image of the application interface. This consumes a large amount of computing power of the CPU. Consequently, a problem such as picture switching freezing is likely to occur, experience of operation smoothness is poor, and user experience is affected.

Therefore, embodiments of this application provide a display method, to improve picture switching smoothness and improve user experience.

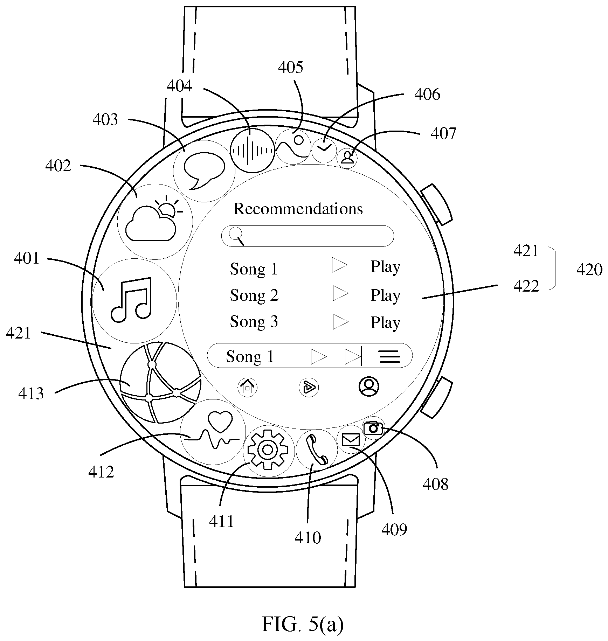

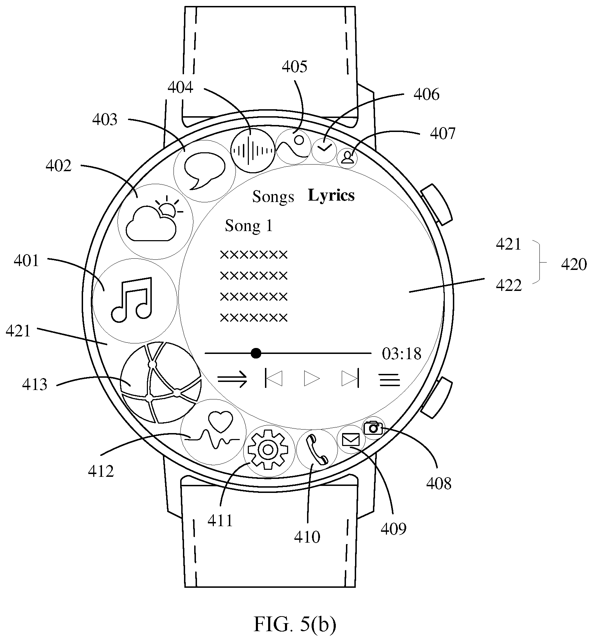

FIG. 5(a) and FIG. 5(b) are diagrams of a home screen of a wearable device according to an embodiment of this application. The home screen 420 of the wearable device is a first interface 420. As shown in FIG. 5(a), the home screen of the wearable device includes a first display area 421 and a second display area 422, and the first display area 421 is set on a side of the second display area 422.

In some embodiments, a size of a central area of the first display area 421 in a first direction may be larger than sizes of areas on two sides of the first display area 421 in the first direction. For example, as shown in FIG. 5(a) and FIG. 5(b), the first display area 421 may be in a crescent shape, and the second display area 422 may be in a circular shape. When a main body 210 of the wearable device is in a circular shape, or when a display 194 of the wearable device is in a circular shape, the first display area 421 and the second display area 422 may entirely cover the display 194. In this case, the first direction may be a radial direction of the main body 210, the central area of the first display area 421 may be an area corresponding to a symmetry axis of the first display area 421, and that the target application is in the central area may mean that a center point of an application icon of the target application is on the symmetry axis of the first display area 421.

The first display area 421 may include at least one application icon, and the at least one application icon is sequentially arranged from the central area of the first display area 421 to the areas on two sides of the first display area 421. For example, the first display area 421 may include application icons 401 to 413 shown in FIG. 5(a). A size of each application icon in the first direction is the same as a size, in the first direction, of an area in which the application icon is. In other words, one side of the application icon is in contact with an edge that is of the first display area 421 and that is away from the second display area 422, and the other side of the application icon is in contact with an edge that is of the second display area 422 and that is close to the first display area 421.

It should be understood that the application icon may alternatively not be in contact with but have a specific gap with the edge that is of the second display area 422 and that is close to the first display area 421. In other words, there may be the specific gap between the first display area 421 and the second display area 422. Similarly, there may also be a specific gap (not shown in the figure) between the first display area 421 and an edge of the wearable device, namely, an edge of the display.

The second display area 422 may include an interface preview picture of the target application, and the target application is an application corresponding to the central area of the first display area 421. As shown in FIG. 5(a), an application icon corresponding to the central area of the first display area 421 is a music icon 401. In this case, an interface preview picture of a music application 401 may be displayed in the second display area 422.

In this embodiment provided in this application, the first display area 421 and the second display area 422 are set, and the interface preview picture of the target application is displayed in the second display area 422. In this case, when a user starts the target application, an application interface of the application may entirely cover a screen starting from an edge position of the second display area 422. Therefore, a stroke of opening the application interface is shortened, and computing power of a CPU in aspects such as image drawing and rendering of the application interface in a process of starting the application is reduced, so that the CPU can have more computing power in aspects such as data preparation and service interaction of the application, picture switching smoothness can be improved when the application is started, and user experience is optimized. In addition, the interface preview picture of the target application is displayed in the second display area 422, so that the user can quickly and clearly determine, based on the interface preview picture without starting the application, what kind of application corresponds to the central area. In other words, the user can quickly learn, without starting the application corresponding to the central area of the first display area 421 by the wearable device, what kind of application the application is. Therefore, user experience is further improved.

In some embodiments, the application interface of the target application may be an interface corresponding to the interface preview picture. In other words, an image displayed on the application interface of the target application may be the same as an image in the interface preview picture. Therefore, the computing power of the CPU for image drawing and rendering can be further reduced, and operation smoothness can be further improved.

In some embodiments, when duration of an interval from a moment at which the first interface 420 is displayed to a moment at which the target application is last exited is less than or equal to a keep-alive time of the target application, the interface preview picture is a picture corresponding to an interface that is of the target application and that is presented when the target application is last exited. When duration of an interval from a moment at which the first interface 420 is displayed to a moment at which the target application is last exited is greater than a keep-alive time of the target application, the interface preview picture is a picture corresponding to a main interface of the target application. The keep-alive time is a time for which a process of the target application runs in the background.

As shown in FIG. 5(a), a picture of a main interface of the music application 401 may be displayed in the second display area 422. When the music application 401 is installed in a system, the picture of the main interface may be automatically captured and cached, and is stored in a folder of the music application 401. During display on a desktop, if the music application 401 is slid to the central area of the first display area 421, and duration of an interval from this moment to a moment at which the music application 401 is last exited is greater than a keep-alive time, the picture of the main interface of the music application 401 may be displayed in the second display area 422.

When the user exits an application, the system may automatically capture a picture of an application interface corresponding to an exit moment, and store the picture in a folder of the application. When the user slides the application icons in the first display area 421 again so that the application returns to the central area again, if duration of an interval from this moment to a moment at which the user last exits the application is less than a keep-alive time of the application, the interface picture captured when the application is last exited may be displayed in the second display area 422. As shown in FIG. 5(b), if an application interface present when the user last exits the music application 401 is a playing interface of a song 1, a screenshot of the playing interface of the song 1 may be displayed in the second display area 422 within the keep-alive time of the music application 401. After capturing a picture of an application interface present when the user exits the application, the system may alternatively replace, with the screenshot, the picture of the application interface captured when the user last exits the application, to save storage space of the system. The interface preview picture may be a compressed picture of the screenshot of the application interface, occupying little system memory.

In some embodiments, if the user stays on the first interface 420, for example, stays on an interface in which the music application 401 is in the central area of the first display area 421 and the interface preview picture of the music application 401 is displayed in the second display area 422, and stays for a long time lasting from within the keep-alive time of the music application 401 to beyond the keep-alive time, the interface preview picture of the music application 401 may be switched from the picture corresponding to the interface present when the music application 401 is last exited to the picture corresponding to the main interface of the music application 401.

Within the keep-alive time of the target application, when the user starts the target application, the displayed application interface may be a corresponding application interface present when the user last exits the application, and this start manner is a cold start manner. In addition, beyond the keep-alive time, when the user starts the target application, the displayed application interface may be the main interface of the application, and this start manner is a warm start manner. In this way, an application interface present when the user starts the application may be the same as an interface corresponding to the interface preview picture, so that interface switching smoothness can be further improved, and user experience can be further optimized.

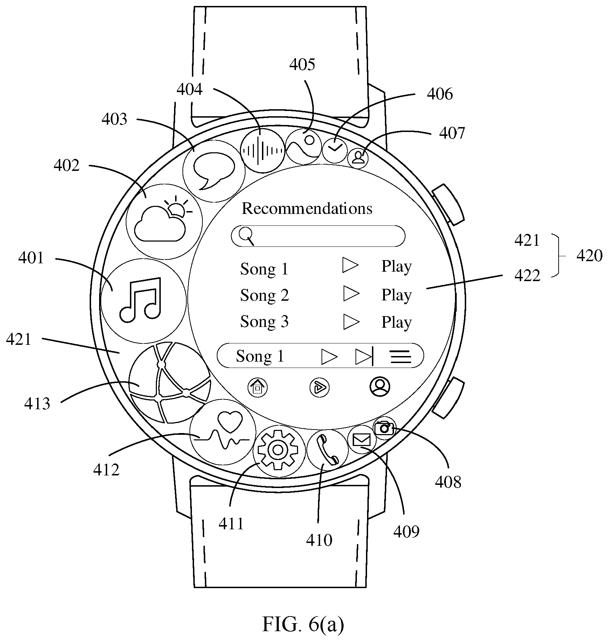

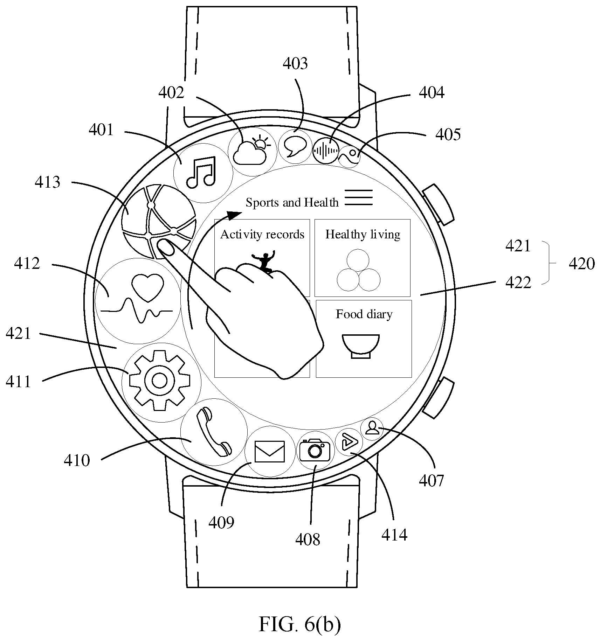

FIG. 6(a) to FIG. 6(d) are diagrams of user interfaces of usage scenarios of the wearable device according to an embodiment of this application. As shown in FIG. 6(a), the application icon corresponding to the central area of the first display area 421 is the music application 401. As shown in FIG. 6(b), the user may slide the application icons in the first display area 421 on the display, and a sliding direction may be a clockwise direction, or may be a counterclockwise direction. A clockwise direction (a direction shown by an arrow in FIG. 6(b)) shown in the figure is used as an example. In response to a sliding operation of the user, each application icon is slid in the clockwise direction, so that display of the application icons in the first display area 421 may be changed from FIG. 6(a) to FIG. 6(b). At a position shown in FIG. 6(a), the music icon 401 is in the central area of the first display area 421, and the music icon 401 is an application icon that is in the first display area 421 and that has a largest size in the first direction. In this case, the interface preview picture of the music application 401 may be displayed in the second display area 422. With the sliding operation, the music icon 401 is slid toward the upper right in the first display area 421, the size is gradually decreased, and a size of a sports and health icon 412 is gradually increased. At a position shown in FIG. 6(b), the sports and health icon 412 is in the central area of the first display area 421, and the sports and health icon 412 is the application icon that is in the first display area 421 and that has the largest size in the first direction. In this case, an interface preview picture of the sports and health application 412 may be displayed in the second display area 422. Another application shown in the figure is similar this. With the sliding operation of the user, the application icon is slid in the first display area 421, and a size of the application icon is correspondingly increased or decreased.

In some embodiments, a maximum of N application icons may be simultaneously displayed in the first display area 421, where N is an integer greater than 1. In other words, a threshold of application icons that may be displayed in the first display area 421 is N. When there are M applications in the wearable device, where M is an integer greater than 1, and M is greater than N, (M-N) application icons cannot be displayed on a current home screen. In response to the sliding operation of the user, the (M-N) application icons may enter the first display area 421 from two sides of the first display area 421 for display. For example, when the application icons in the first display area 421 are slid clockwise, the (M-N) application icons may enter the first display area 421 from a lower right side of the first display area 421 for display, and may enter the first display area 421 from an upper right side of the first display area 421 for display when the application icons are slid counterclockwise. For example, as shown in FIG. 6(b), in response to a clockwise sliding operation of the user, a video application icon 414 that is originally not displayed on the interface shown in FIG. 6(a) is displayed in the first display area 421 following a camera application icon 408.

For example, when the wearable device includes only one application, an application icon of the application may be displayed in the central area of the first display area 421. Correspondingly, an interface preview picture of the application may be displayed in the second display area 422, and the application icon may be slid to any position of the first display area 421 under an operation such as sliding by the user. For another example, the wearable device includes three applications. An application icon of any one of the three applications may be displayed in the central area of the first display area 421, and the other two application icons may be displayed on one side of the application icon in the central area or separately displayed on two sides of the application icon in the central area. Under the operation such as sliding by the user, the application icons of the three applications may be moved to any position of the first display area 421, and each may be displayed in the central area. Correspondingly, an interface preview picture of an application corresponding to the central area of the first display area 421 may be displayed in the second display area 422.

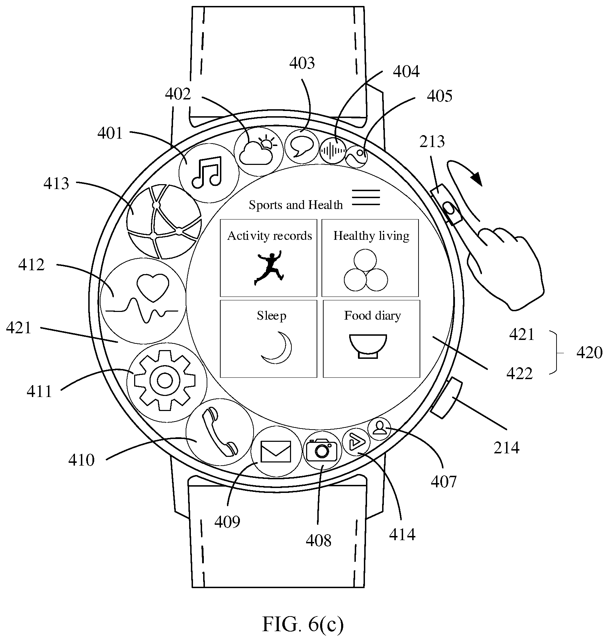

Similarly, as shown in FIG. 6(c), in response to rotating a first control button 213 or a second control button 214 clockwise or counterclockwise by the user, each application icon in the first display area 421 is slid in the clockwise direction or the counterclockwise direction correspondingly. The user may set, on a setting interface, that the first control button 213 and/or the second control button 214 support/supports sliding of the application icons in the first display area 421.

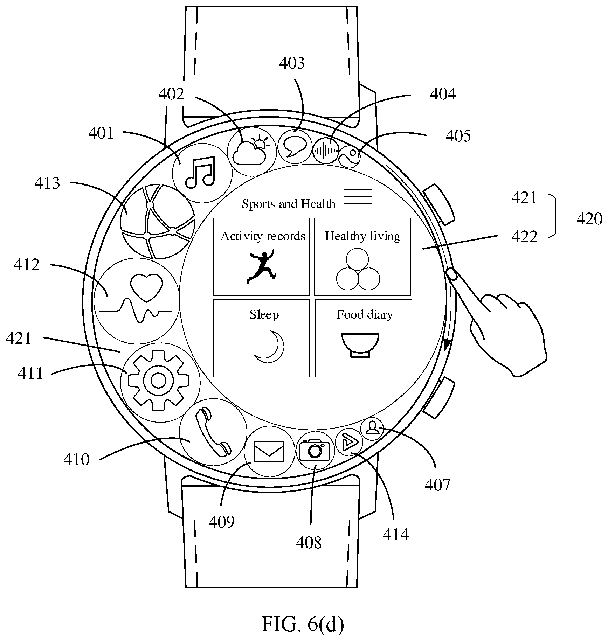

As shown in FIG. 6(d), when the wearable device includes a sliding frame 215, in response to rotating the sliding frame 215 clockwise or counterclockwise by the user, each application icon in the first display area 421 may be rotated in the clockwise direction or the counterclockwise direction correspondingly.

In some embodiments, when a sliding action of sliding the application icons by the user stops, if no application icon is in the central area of the first display area 421, an application icon closest to a central area position is automatically displayed in the central area. For example, the user may slide each application icon in the first display area 421 by using the method described in FIG. 6(b) to FIG. 6(d). The sliding operation of the user may have a specific speed. When the user stops sliding, each application icon is still slid at the specific speed due to inertia. When sliding of each application icon stops, if no application icon is in the central area of the first display area 421, the application icon closest to the central area is automatically displayed in the central area. Correspondingly, an activity manager service (activity manager service, AMS) module of the wearable device may determine whether an application icon is in the central area of the first display area 421 when sliding stops. If no application icon is in the central area of the first display area 421, the module limits an application icon that is closest to the central area of the first display area 421 when sliding stops. That an application icon is closest to the central area may be that a center point of the application icon is closest to a center point of the first display area 421 in a direction of a sliding axis of the application icon.

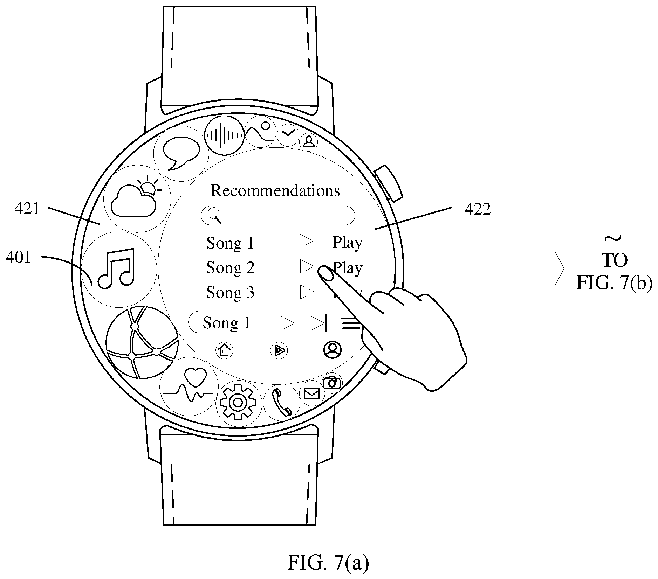

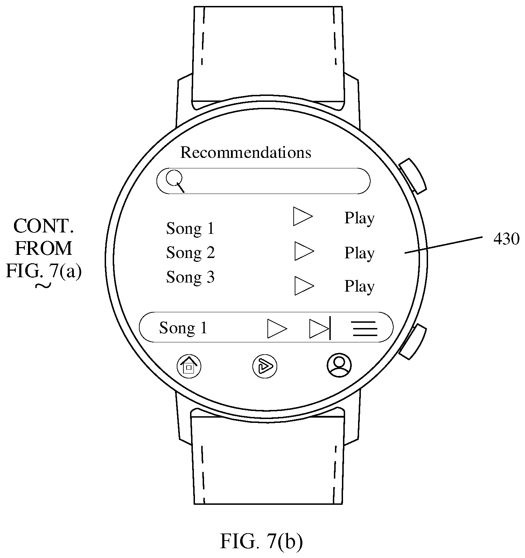

FIG. 7(a) to FIG. 7(d) are diagrams of user interfaces corresponding to a method for accessing the target application according to an embodiment of this application. As shown in FIG. 7(a), after the user slides the application icons in the first display area 421 by using the method shown in FIG. 6(b) to FIG. 6(d), the music icon 401 is displayed in the central area of the first display area 421, and the second display area 422 includes the interface preview picture of the music application 401. In response to tapping the interface preview picture by the user, the AMS module starts the music application 401, so that an application interface 430 of the music application 401 entirely covers a display area of the display, as shown in FIG. 7(b). When the music application 401 is started, the application interface of the music application 401 entirely covers the screen starting from the edge position of the second display area 422. Therefore, the stroke of starting the application is shortened, the computing power of the CPU is reduced, so that picture switching smoothness can be improved. In addition, the application interface present after the music application 401 is started and an interface corresponding to the interface preview picture may be a same interface, so that smoothness is further improved, and user experience is optimized.

In some embodiments, when the application icon of the music application 401 is in the central area of the first display area 421, and the interface preview picture of the music application 401 is displayed in the second display area 422, in response to tapping the application icon (not shown in the figure) of the music application 401 by the user, the music application 401 is started, and the application interface of the music application 401 entirely covers the screen from the second display area 422.

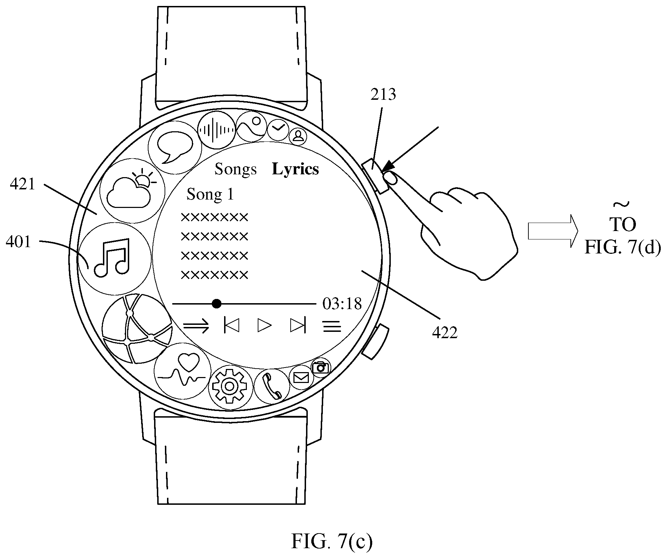

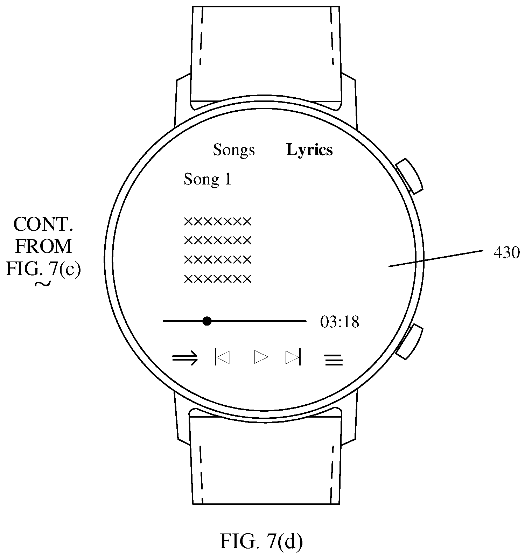

As shown in FIG. 7(c), the user may alternatively enter the application interface 430 of the music application 401 by pressing the first control button 213 or the second control button 214. The application interface 430 of the music application 401 may be shown in FIG. 7(d). An interface corresponding to the interface preview picture in FIG. 7(a) is the main interface of the music application 401, and the application interface 430 displayed in FIG. 7(b) is the main interface of the music application 401. For example, the main interface may be displayed beyond the keep-alive time of the music application 401. Corresponding interfaces in FIG. 7(c) and FIG. 7(d) are the playing interface of the song 1 of the music application 401. For example, the interface may be displayed within the keep-alive time of the music application 401, and the interface may be a corresponding interface present when the music application 401 is last exited. The user may set, on the setting interface, that the first control button 213 or the second control button 214 supports a pressing operation of the user to access the target application.

In some embodiments, when the music icon 401 is displayed in the central area of the first display area 421, and a staying time of the home screen 420 of the wearable device is greater than or equal to a preset threshold, the wearable device automatically starts the music application 401, and the application interface 430 of the music application 401 entirely covers the screen (which is not shown in the figure). The preset threshold may be set by the user in a setting option. For example, when the staying time of the home screen 420 is greater than or equal to 3000 milliseconds, the AMS automatically starts the music application 401, and the application interface of the music application 401 entirely covers the display, to start the target application more conveniently.

If the user stays on the home screen 420 of the wearable device and the staying time is less than the preset threshold, and duration of the interval from the current moment, namely, the moment at which the home screen 420 is displayed, to the moment at which the music application 401 is last exited is greater than the keep-alive time of the music application 401, the interface preview picture of the music application 401 is switched from the picture corresponding to the interface present when the music application 401 is last exited to the picture corresponding to the home screen of the music application 401. When the time for staying on the main interface is less than the preset threshold, the AMS does not automatically start the music application 401. If the duration of staying on the home screen 420 causes the music application 401 to last beyond the keep-alive time of the music application 401, for example, after the user exits the music application 401 and uses another application, and then returns to the home screen 420 of the wearable device, moves the music application 401 to the central area of the first display area 421, and stays for a specific time period, the music application 401 may last beyond the keep-alive time. In this case, the AMS module may switch the interface preview picture of the second display area 422, so that the application interface present when the music application 401 is started and the interface corresponding to the interface preview picture are a same interface, to improve picture switching smoothness.

In some embodiments, the user may alternatively tap an application icon that is not in the central area of the first display area 421 to enter an application interface of the application. For example, as shown in FIG. 7(a), the music application 401 is the application in the central area of the first display area 421. In response to tapping the sports and health icon 412 by the user, the interface preview picture (not shown in the figure) of the sports and health application 412 may be displayed in the second display area 422. Further, in response to an operation such as tapping the interface preview picture of the sports and health application 412 by the user, pressing the first control button 213 or the second control button 214 by the user, or duration of staying on an interface of displaying the interface preview picture of the sports and health application 412 by the user being greater than or equal to the preset threshold, the sports and health application 412 is started, and the application interface of the sports and health application 412 entirely covers the screen.

An application icon and an interface preview picture may be mapped to a corresponding application, so that, in response to a tapping operation of the user, an operation of pressing a control button by the user, or an operation of staying for a preset time period, the corresponding application can be linked, to start the application.

Correspondingly, the AMS module may start the corresponding application in response to operations such as tapping an interface preview picture, tapping an application icon, and pressing the control button by the user, and an application interface entirely covers the screen.

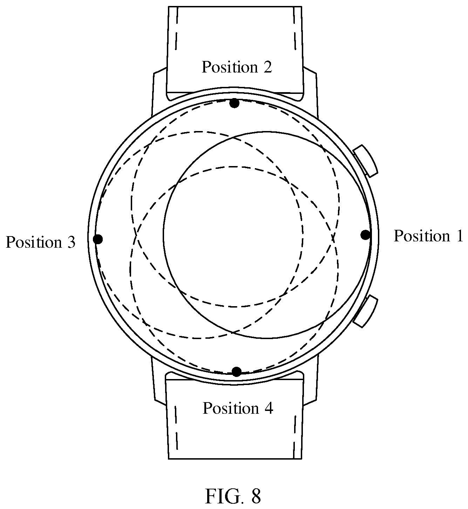

Alternatively, the user may adjust display positions of the first display area 421 and the second display area 422 according to an actual use requirement and a use habit, as shown in FIG. 8.

In response to touching and holding the first display area 421 or the second display area 422 by the user, the wearable device may display a first replacement area and/or a second replacement area. The first replacement area is a replacement area of the first display area 421, and the second replacement area is a replacement area of the second display area 422. The first replacement area and/or the second replacement area may include one or more areas. As shown in FIG. 8, a solid-line circle at a position 1 is the original first display area 421. After the first display area 421 is touched and held, the first replacement area may be displayed at a position 2, a position 3, and a position 4, as shown by dashed-line circles. The first replacement area may include one or more areas, so that the user selects a position that actually needs to be set, for example, the user may select a setting position according to a left-hand or right-hand wearing habit. Correspondingly, a position of the second replacement area relative to the first replacement area corresponds to a position of the second display area relative to the first display area. When a main body of the wearable device is in a circular shape, the second replacement area may be an area of the display other than the first replacement area. For example, when the position 1 is the first display area, the position 3 may be the second display area. When the position 2 is the first replacement area, the position 4 may be the second replacement area. When the first replacement area is displayed, the second replacement area may also be displayed correspondingly.

The user may drag the second display area at the position 1 to the second replacement area at the position 3, so that the interface preview picture of the target application is displayed in the second replacement area at the position 3. Correspondingly, in response to an operation of dragging the second display area by the user, each application icon may be automatically displayed in the first replacement area at the position 1, that is, an area outside the second replacement area of the display, or each application icon may be automatically displayed in the first replacement area corresponding to the position 1. Alternatively, the user may directly tap the second replacement area at the position 3, so that the interface preview picture of the target application is displayed in the second replacement area at the position 3. Correspondingly, each application icon is automatically displayed in the second replacement area of the display.

Correspondingly, a window manager (window manager service, WMS) module may display the first replacement area and/or the second replacement area, and after the user selects the replacement areas, reposition positions of the application icon and the interface preview picture, so that the application icon and the interface preview picture are displayed in new areas.

It should be understood that, when the wearable device is in the circular shape, the first display area 421 and the second display area 422, or the first replacement area and the second replacement area are two areas that are displayed in cooperation. The first display area 421 and the second display area 422 may entirely cover the display. Similarly, the first replacement area and the second replacement area may also entirely cover the display. When a position of one of the areas changes, a position of the other area changes accordingly. Alternatively, the user may drag the first display area 421, or drag a display area of each application icon to change the display position. Correspondingly, the position of the interface preview picture of the target application also changes accordingly.

Alternatively, the user may perform an operation such as touching and holding the first control button 213 or the second control button 214 or consecutively pressing the first control button 213 or the second control button 214, so that the wearable device displays the first replacement area and/or the second replacement area. This is not limited in this application.

The position 1, the position 2, the position 3, and the position 4 are merely used as examples for description. The first replacement area and the second replacement area may alternatively be at other positions of the display. There may alternatively be not only three first replacement areas and second replacement areas shown in the figure. The positions and quantities of the first replacement areas and the second replacement areas are not limited in this application.

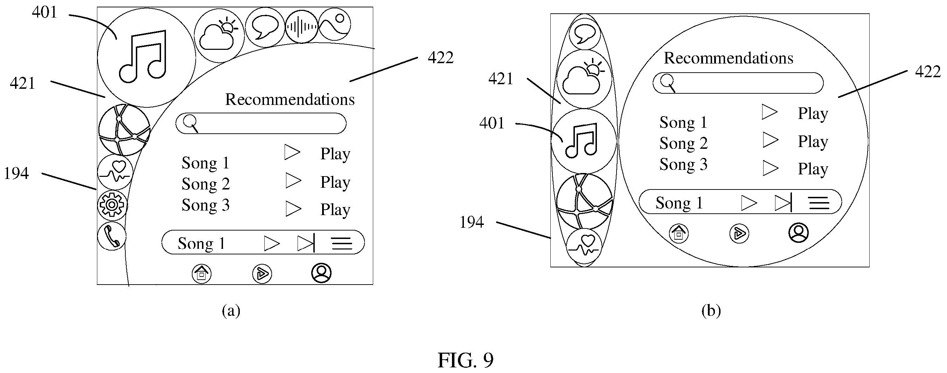

The main body or the display of the wearable device corresponding to the user interface of the wearable device described in FIG. 5(a) to FIG. 8 may be in the circular shape. FIG. 9 is a diagram of another user interface according to an embodiment of this application. A main body of the wearable device may alternatively be in a rectangular shape, a square shape, or another shape.

In some embodiments, as shown in (a) in FIG. 9, a display 194 may be in the square shape, a second display area 422 may be in a quarter-circle shape, and a center of the quarter circle may be at any endpoint of the display 194. A first display area 421 may be an area of the display other than the second display area 422. Correspondingly, a central area of the first display area 421 may be in a diagonal area of the center, and an icon in the central area may be on a diagonal line of the display. A size of the first display area 421 in a first direction may alternatively be gradually decreased from the central area to areas on two sides. Correspondingly, a size of an application icon at a corresponding position also changes accordingly. In this embodiment, the first direction may be a radial direction of the quarter circle.

In some other embodiments, as shown in (b) in FIG. 9, a display may be in a rectangular shape, a second display area 422 may be in a circular shape, and a diameter of the circle is equal to a side length of a short side of the rectangle. A first display area 421 may be in a spindle shape, and a sum of a maximum size of the spindle in a first direction and the diameter of the circle is equal to a side length of a long side of the rectangle. In this embodiment, the first direction may be a direction parallel to the long side of the rectangle. The first display area 421 and the second display area 422 may not entirely cover the display 194.

When a direction of the long side of the rectangle is a left-right direction, and a direction of the short side of the rectangle is an up-down direction, the first display area 421 may be on a left side or a right side of the second display area 422, and each application icon may be slid upward or downward. Correspondingly, display directions of each application icon and an interface preview picture of a target application may be displayed in the direction of the short side, so that a user can observe the display in the direction of the short side, as shown in (b) in FIG. 9. When a direction of the long side of the rectangle is an up-down direction, and a direction of the short side of the rectangle is a left-right direction, the first display area 421 may be on an upper side or a lower side of the second display area 422, and each application icon may be slid leftward or rightward. Correspondingly, display directions of each application icon and an interface preview picture of a target application may be displayed in the direction of the long side (which is not shown in the figure), so that a user can observe the display in the direction of the long side.

It should be understood that the foregoing is merely used as an example to describe a shape of a display area corresponding to the display method provided in embodiments of this application, and should not limit shapes of the first display area 421 and the second display area 422 provided in this application. For example, the first display area 421 may alternatively be in a rectangular shape. Correspondingly, sizes of application icons in the first display area 421 are the same, and the sizes of the application icons do not change in a sliding process of the application icons. The second display area 422 may alternatively be in an ellipse shape, another irregular shape, or the like. Regardless of the shapes of the first display area 421 and the second display area 422, when the first display area 421 is replaced with a first replacement area, and the second display area 422 is replaced with a second replacement area, the first replacement area and the second replacement area may be displayed simultaneously, or only the first replacement area or the second replacement area may be displayed. When the user moves the first display area or the second display area, a position of the other display area changes accordingly.

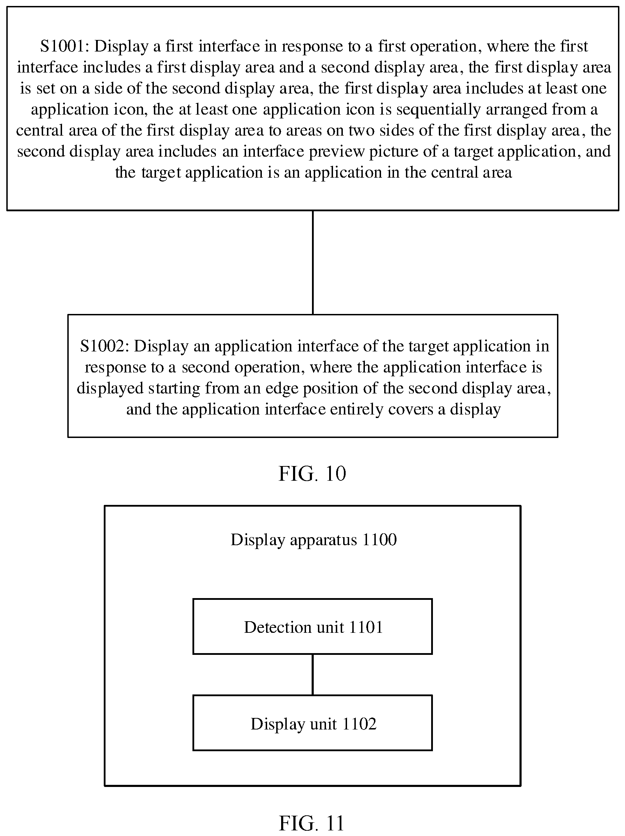

With reference to embodiments described in FIG. 5(a) to FIG. 9, an embodiment of this application provides a display method. The method may be implemented in the wearable device described in FIG. 1 to FIG. 3. FIG. 10 is a schematic flowchart of a display method according to an embodiment of this application. As shown in FIG. 10, the method may include the following steps.

S1001: Display a first interface in response to a first operation, where the first interface includes a first display area and a second display area, the first display area is set on a side of the second display area, the first display area includes at least one application icon, the at least one application icon is sequentially arranged from a central area of the first display area to areas on two sides of the first display area, the second display area includes an interface preview picture of a target application, and the target application is an application in the central area.

S1002: Display an application interface of the target application in response to a second operation, where the application interface is displayed starting from an edge position of the second display area, and the application interface entirely covers a display.

Optionally, the first operation may be an operation such as turning on the wearable device by the user by, for example, pressing the first control button 213 or the second control button 214, double-tapping a display 194, or another operation to start the device or exiting an application interface of a specific application to return to a home screen of the wearable device.

In some embodiments, the application interface is an interface corresponding to the interface preview picture. In other words, an image displayed on the application interface is the same as an image in the interface preview picture.

In some embodiments, when duration of an interval from a moment at which the first interface is displayed to a moment at which the target application is last exited is less than or equal to a keep-alive time of the target application, the interface preview picture is a picture corresponding to an interface that is of the target application and that is presented when the target application is last exited, and the keep-alive time is a time for which a process of the target application runs in the background. Alternatively, when duration of an interval from a moment at which the first interface is displayed to a moment at which the target application is last exited is greater than a keep-alive time of the target application, the interface preview picture is a picture corresponding to a main interface of the target application.

In some embodiments, the second operation includes any one of the following operations: staying on the first interface, where a staying time is greater than or equal to a preset threshold; tapping an application icon of the target application; and tapping the interface preview picture.

Optionally, when the time for staying on the first interface is less than the preset threshold, and duration of an interval from a current moment to the moment at which the target application is last exited is greater than the keep-alive time, the method further includes: switching the interface preview picture from the picture corresponding to the interface that is of the target application and that is presented when the target application is last exited to the picture corresponding to the main interface of the target application.

In some embodiments, the method further includes: in response to a third operation, sliding the at least one application icon in the first display area. The third operation includes any one of the following operations: sliding the at least one application icon on the display of the wearable device; rotating a control button of the wearable device; and rotating a sliding frame of the wearable device.

In some embodiments, the method further includes: displaying a first replacement area and/or a second replacement area in response to a fourth operation performed on the first display area or the second display area, where the first replacement area is a replacement area of the first display area, the first replacement area and the first display area are different areas, the second replacement area is a replacement area of the second display area, and the second replacement area and the second display area are different areas; and in response to a fifth operation, displaying the at least one application icon in the first replacement area and displaying the interface preview picture in the second replacement area.

Optionally, the fourth operation may be, for example, an operation such as touching and holding or double-tapping the first display area or the second display area. The fifth operation may be, for example, an operation such as dragging the first display area to the first replacement area, dragging the second display area to the second replacement area, or tapping the first replacement area or the second replacement area.

Optionally, the first replacement area and/or the second replacement area include/includes one or more areas.

Optionally, the second display area further includes a name of the target application.

Optionally, the first display area is in a crescent shape or a spindle shape, and the second display area is in a circular shape.

Optionally, the wearable device is a smartwatch or a smart band.

The foregoing describes the display method provided in embodiments of this application with reference to FIG. 10. The following describes a display apparatus provided in embodiments of this application with reference to FIG. 11.

As shown in FIG. 11, the apparatus 1100 may include a detection unit 1101 and a display unit 1102. The detection unit 1101 and the display unit 1102 cooperate with each other, so that the apparatus 1100 can perform the actions in embodiments described in FIG. 5(a) to FIG. 10. For example, the detection unit 1101 may be configured to perform detection actions on the first operation to the fifth operation in embodiments described in FIG. 5(a) to FIG. 10, and the display unit 1102 may be configured to perform an operation of displaying user interfaces described in FIG. 5(a) to FIG. 10.

Optionally, the apparatus 1100 may further include a processing unit 1103. The processing unit 1103 may be configured to perform operations such as interface preview picture switching in embodiments described in FIG. 5(a) to FIG. 10.

An embodiment of this application further provides a wearable device 1200, configured to perform the foregoing display method. The wearable device 1200 may include a processor 1201 and a memory 1202. The processor may be configured to perform a processing operation performed by the wearable device in embodiments shown in FIG. 5(a) to FIG. 10, for example, operations such as user operation detection and user interface displaying. The memory stores one or more computer programs, the one or more computer programs include instructions, and when the instructions are executed by one or more processors, any one of the foregoing display methods is performed.

An embodiment of this application further provides a computer-readable storage medium. The computer-readable storage medium stores a computer program or instructions, and the computer program or the instructions are executed by a computer (for example, a processor), to perform some or all of the steps of any method performed by any apparatus in embodiments of this application.

An embodiment of this application further provides a computer program product including instructions. When the computer program product runs on a computer, some or all of the steps of any method performed by any apparatus in embodiments of this application are performed.

An embodiment of this application further provides a chip system. The chip system includes at least one processor, and when program instructions are executed on the at least one processor, some or all of the steps of any method performed by any apparatus in embodiments of this application are performed.

The wearable device, the computer storage medium, the computer program product, or the chip provided in embodiments is configured to perform the corresponding method provided above. Therefore, for beneficial effects that can be achieved by the computer storage medium, the computer program product, or the chip, refer to the beneficial effects in the corresponding method provided above. Details are not described herein again.

Based on the descriptions about the foregoing implementations, a person skilled in the art may understand that, for a purpose of convenient and brief description, division into the foregoing functional modules is used as an example for illustration. During actual application, the foregoing functions may be allocated to different functional modules and implemented as required. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or other forms.

The units described as separate components may or may not be physically separate, and components displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display method, applied to a wearable device, and comprising:
displaying a first interface in response to a first operation, wherein the first interface comprises a first display area and a second display area, the first display area is set on a side of the second display area, the first display area comprises at least one application icon, the at least one application icon is sequentially arranged from a central area of the first display area to areas on two sides of the first display area, the second display area comprises an interface preview picture of a target application, and the target application is an application in the central area; and
displaying an application interface of the target application in response to a second operation, wherein the application interface is displayed starting from an edge position of the second display area, and the application interface entirely covers a display.

2. The display method according to claim 1, wherein the application interface is an interface corresponding to the interface preview picture.

3. The display method according to claim 1 or 2, wherein
when duration of an interval from a moment at which the first interface is displayed to a moment at which the target application is last exited is less than or equal to a keep-alive time of the target application, the interface preview picture is a picture corresponding to an interface that is of the target application and that is presented when the target application is last exited, and the keep-alive time is a time for which a process of the target application runs in the background; or
when duration of an interval from a moment at which the first interface is displayed to a moment at which the target application is last exited is greater than a keep-alive time of the target application, the interface preview picture is a picture corresponding to a main interface of the target application.

4. The display method according to any one of claims 1 to 3, wherein the second operation comprises any one of the following operations:
staying on the first interface, wherein a staying time is greater than or equal to a preset threshold;
tapping an application icon of the target application; and
tapping the interface preview picture.

5. The display method according to any one of claims 1 to 4, wherein the display method further comprises:
in response to a third operation, sliding the at least one application icon in the first display area.

6. The display method according to claim 5, wherein the third operation comprises any one of the following operations:
sliding the at least one application icon on the display of the wearable device;
rotating a control button of the wearable device; and
rotating a sliding frame of the wearable device.

7. The display method according to any one of claims 1 to 6, wherein the display method further comprises:
displaying a first replacement area and/or a second replacement area in response to a fourth operation performed on the first display area or the second display area, wherein the first replacement area is a replacement area of the first display area, and the second replacement area is a replacement area of the second display area; and
in response to a fifth operation, displaying the at least one application icon in the first replacement area and displaying the interface preview picture in the second replacement area.

8. The display method according to claim 7, wherein the first replacement area and/or the second replacement area comprise/comprises one or more areas.

9. The display method according to any one of claims 1 to 8, wherein the second display area further comprises a name of the target application.

10. The display method according to any one of claims 1 to 9, wherein the first display area is in a crescent shape or a spindle shape, and the second display area is in a circular shape.

11. The display method according to any one of claims 1 to 10, wherein the wearable device is a smartwatch or a smart band.

12. A display apparatus, comprising a module or a unit configured to perform the display method according to any one of claims 1 to 11.

13. A wearable device, comprising a processor and a memory, wherein the memory is configured to store a computer program, and the processor is configured to: invoke the computer program from the memory and run the computer program, so that the wearable device performs the display method according to any one of claims 1 to 11.

14. A chip system, wherein the chip system comprises at least one processor, and when program instructions are executed in the at least one processor, the display method according to any one of claims 1 to 11 is implemented.

15. A computer program storage medium, wherein the computer-readable medium stores program code, and when the program code is run on a computer, the computer is enabled to perform the display method according to any one of claims 1 to 11.
